# EUROPÄISCHE PATENTSCHRIFT

(11) **EP 1 028 875 B1**
(45) Veröffentlichungstag und Bekanntmachung des Hinweises auf die Patenterteilung: **22.09.2004**
(21) Anmeldenummer: 98963422.5
(22) Anmeldetag: 06.11.1998
(51) Int. Cl.: B60R 22/24

(54) **UMLENKBESCHLAG FÜR EINEN FAHRZEUG-SICHERHEITSGURT**
DEFLECTION ASSEMBLY FOR A MOTOR VEHICLE SEAT BELT
FERRURE DE DEVIATION POUR CEINTURE DE SECURITE DE VEHICULE

(30) Priorität: 12.11.1997 DE 29720102 U
(43) Veröffentlichungstag der Anmeldung: 23.08.2000
(73) Patentinhaber: TRW Automotive GmbH, 73553 Alfdorf (DE)
(72) Erfinder: MÖNDEL, Karl, D-73529 Schwäbisch Gmünd (DE)
(74) Vertreter: Sties, Jochen, Dipl.-Ing.
(86) Internationale Anmeldenummer: PCT/EP1998/007114
(87) Internationale Veröffentlichungsnummer: WO 1999/024295

(56) Entgegenhaltungen:
- DE-A- 2 607 170
- DE-U- 29 502 192
- DE-U- 29 601 566

## Beschreibung

Die Erfindung betrifft einen Umlenkbeschlag für einen Fahrzeug-Sicherheitsgurt, mit einem Haltebügel und einer in dem Haltebügel auf einer Achse mittels Wälzlagern gelagerten Umlenkrolle. Ein solcher Umlenkbeschlag ist beispielsweise aus der DE-U-295 02 192 bekannt.

Der Umlenkbeschlag ist üblicherweise entweder an der B-Säule oder der C-Säule des Fahrzeugs befestigt und dient dazu, den Sicherheitsgurt von einem Gurtaufroller zum Fahrzeuginsassen hin umzulenken. Solche Umlenkbeschläge sind in den verschiedensten Gestaltungen bekannt. Besonders geringe Verluste beim Umlenken des Sicherheitsgurtes ergeben sich bei Umlenkbeschlägen, die mit einer wälzgelagerten Umlenkrolle versehen sind. Aufgrund ihres vergleichsweise aufwendigen Aufbaus sind solche Umlenkbeschläge jedoch relativ schwer, insbesondere weil sie im Hinblick auf besonders hohe Belastungen ausgelegt sind, die aufgrund der Umlenkung des Gurtbandes um teilweise erheblich mehr als 90° fast das Doppelte der auf den Sicherheitsgurt einwirkenden Belastung betragen können.

Die Erfindung schafft einen Umlenkbeschlag, der trotz einer sehr hohen Belastbarkeit und des Vorhandenseins einer wälzgelagerten Umlenkrolle über ein vergleichsweise niedriges Gewicht verfügt. Gemäß der Erfindung ist bei einem gattungsgemäßen Umlenkbeschlag vorgesehen, daß der Haltebügel ein Gesenkschmiedeteil aus einer Aluminiumlegierung ist. Die Verwendung eines gesenkgeschmiedeten Teils aus einer Aluminiumlegierung vereint die Gewichtsvorteile, die eine Aluminiumlegierung bietet, mit den Festigkeitsvorteilen, die aus der sich beim Umformen des Materials ergebenden Verfestigung resultieren. Auf diese Weise ist es möglich, auf die Verwendung von Stahl zu verzichten, der bisher aufgrund seiner im Vergleich zu beispielsweise spritzgegossenen Aluminiumlegierungen höheren Festigkeit für unverzichtbar gehalten wurde. Durch die Verwendung eines gesenkgeschmiedeten Haltebügels ergeben sich weiterhin Kostenvorteile, da dieser in einem einzigen Arbeitsgang hergestellt werden kann.

Gemäß der bevorzugten Ausführungsform der Erfindung ist vorgesehen, daß der Haltebügel einen mit einer Öffnung für eine Betestigungsschraube versehenen Befestigungsabschnitt und einen Lagerabschnitt enthält, der mit dem Befestigungsabschnitt zusammen einen geschlussenen, die Umlenkrolle umgebenden Ring bildet. Wenn der Haltebügel als geschlossener Ring ausgebildet wird, in welchem die Unilenkrolle gelagert ist, ergibt sich eine besonders hohe Belastbarkeit des Umlenkbeschlags.

Weitere bevorzugte Ausgestaltungen eines erfindungsgemäßen Umlenkbeschlags ergeben sich aus den Unteransprüchen.

Die Erfindung wird nachfolgend anhand einer bevorzugten Ausführungsform beschrieben, die in den Zeichnungen dargestellt ist. In diesen zeigen:
- Figur 1 eine perspektivische Ansicht eines erfindungsgemäßen Umlenkbeschlags;
- Figur 2 eine Draufsicht auf den Umlenkbeschlag von Figur 1;
- Figur 3 einen Schnitt entlang der Ebene III-III von Figur 2: und
- Figur 4 eine entlang der Ebene IV-IV von Figur 3 teilgeschnittenc Seitenansicht eines erfindungsgemäßen Umlenkbeschlags.

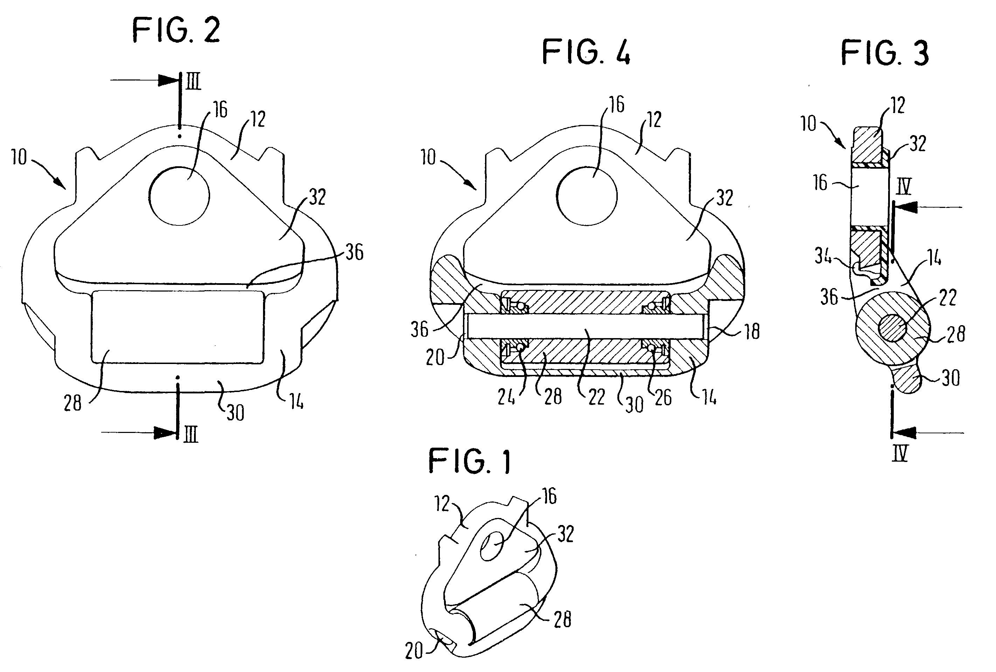

Der in den Figuren 1 bis 4 dargestellte Umlenkbeschlag enthält einen Haltebügel 10, der aus einem Befestigungsabschnitt 12 und einem Lagerabschnitt 14 besteht. Der Befestigungsabschnitt 12 ist mit einer Öffnung 16 versehen, die zur Aufnahme einer Befestigungsschraube dient, mit der der Umlenkbeschlag am Fahrzeug befestigt werden kann. Der Lagerabschnitt ist mit zwei Durchgangsöffnungen 18, 20 versehen, durch die hindurch sich eine Achse 22 erstreckt. Auf der Achse 22 ist mittels Wälzlagern 24, 26 eine Umlenkrolle 28 drehbar gelagert. Die Achse 22 ist in den Durchgangslöchern 18, 20 verstemmt.

Der aus dem Befestigungsabschnitt 12 und dem Lagerabschnitt 14 gebildete Haltebügel 10 besteht aus einer Aluminiumlegierung, die gesenkgeschmiedet ist. Der Haltebügel 10 besteht somit aus einem einzigen Teil, dessen Festigkeit aufgrund der sich beim Umformen ergebenden Verfestigung des Materials besonders hoch ist. Da der Befestigungsabschnitt 12 und der Lagerabschnitt 14 zusammen einen geschlossenen Ring bilden, ist die Belastbarkeit des Haltebügels 10 besonders hoch. Der Lagerabschnitt 14 weist einen sich parallel zur Achse 22 erstreckenden Stabilisierungssteg 30 auf, der einen Querschnitt hat, der einem Rechteck mit einem auf der vom Befestigungsabschnitt 12 abgewandten Seite angesetzten Halbkreis entspricht.

Die Umlenkrolle 28 weist einen solchen Durchmesser auf, daß sie über die an sie angrenzenden Bereiche des Lagerabschnittes 14 geringfügig radial übersteht. Das Gurtband kann also, wenn es schräg über die Umlenkrolle 28 gezogen wird, von der Umlenkrolle herunter auf die angrenzenden, feststehenden Bereiche des Lagerabschnittes 14 wandern. Diese dienen dann ebenfalls zur Umlenkung des Gurtbandes.

Am Befestigungsabschnitt 12 ist eine Kunststoffabdeckung 32 angebracht, die in die Befestigungsöffnung 16 eingreift und die der Umlenkrolle 28 zugewandte Seite des Befestigungsabschnittes mittels eines Rasthakens 34 umgreift, so daß die Kunststoffabdeckung 32 am Befestigungsabschnitt 12 verklippst ist. Zwischen der Umlenkrolle, dem Lagerteil und der Kunststoffabdeckung 32 ist ein Durchgangsspalt 36 für den Sicherheitsgurt gebildet. Dieser Durchgangsspalt 36 hat im Bereich der Umlenkrolle 28 eine konstante Dicke. Da die Umlenkrolle 28 über die angrenzenden Bereiche des Lagerabschnittes 14 auf der dem Befestigungsabschnitt 12 zugewandten Seite übersteht, hat der Durchgangsspalt 36 in den an die Umlenkrolle 28 angrenzenden Bereichen zunächst eine größere Breite als im Bereich der Umlenkrolle 28.

## Patentansprüche

1. Umlenkbeschlag für einen Fahrzeug-Sicherheitsgurt, mit einem Haltebügel (10) und einer in dem Haltebügel (10) auf einer Achse (22) mittels Wälzlagern (24, 26) gelagerten Umlenkrolle (28), **dadurch gekennzeichnet, daß** der Haltebügel (10) ein Gesenkschmiedeteil aus einer Aluminiumlegierung ist.

2. Umlenkbeschlag nach Anspruch 1, **dadurch gekennzeichnet, daß** der Haltebügel (10) einen mit einer Öffnung (16) für eine Befestigungsschraube versehenen Befestigungsabschnitt (12) und einen Lagerabschnitt (14) enthält, der mit dem Befestigungsabschnitt (12) zusammen einen geschlossenen, die Umlenkrolle (28) umgebenden Ring bildet.

3. Umlenkbeschlag nach Anspruch 2, **dadurch gekennzeichnet, daß** der Lagerabschnitt (14) einen Stabilisierungssteg (30) aufweist, der sich auf der von dem Befestigungsabschnitt (12) abgewandten Seite der Umlenkrolle (28) erstreckt.

4. Umlenkbeschlag nach Anspruch 2 oder 3, **dadurch gekennzeichnet, daß** der Lagerabschnitt (14) mit Durchgangslöchern (18, 20) für die Achse (22) der Umlenkrolle (28) versehen ist und daß die Achse (22) in den Durchgangslöchern (18, 20) verstemmt ist.

5. Umlenkbeschlag nach einem der Ansprüche 2 bis 4, **dadurch gekennzeichnet, daß** die Umlenkrolle (28) auf der dem Befestigungsabschnitt (12) zugewandten Seite über die angrenzenden Bereiche des Lagerabschnittes (14) radial übersteht.

6. Umlenkbeschlag nach einem der Ansprüche 2 bis 5, **dadurch gekennzeichnet, daß** am Befestigungsabschnitt (12) eine Kunststoffabdeckung (32) verklippst ist, die in die Befestigungsöffnung (16) eingreift und den der Umlenkrolle (28) zugewandten Abschnitt des Befestigungsabschnittes (12) umgreift.

7. Umlenkbeschlag nach Anspruch 6, **dadurch gekennzeichnet, daß** zwischen der Umlenkrolle (28), dem Lagerteil (14) und der Kunststoffabdeckung (32) ein Durchgangsspalt (36) für den Sicherheitsgurt gebildet ist, der im Bereich der Umlenkrolle (28) eine konstante Breite hat.

8. Umlenkbeschlag nach Anspruch 6 oder 7, **dadurch gekennzeichnet, daß** der der Achse (22) der Umlenkrolle (28) zugewandte Rand der Kunststoffabdeckung (32) in den der Umlenkrolle (28) nicht gegenüberliegenden Bereichen einen größeren Abstand von der Achse (22) der Umlenkrolle (28) hat als in den der Umlenkrolle (28) gegenüberliegenden Bereichen.

9. Umlenkbeschlag nach einem der Ansprüche 6 bis 8, **dadurch gekennzeichnet, daß** der der Achse (22) der Umlenkrolle (28) zugewandte Rand der Kunststuffabdeckung (32) in den der Umlenkrolle (28) nicht gegenüberliegenden Bereichen eine Krümmung aufweist.

## Claims

1. A deflector fitting for a vehicular seat belt, comprising a supporting frame (10) and a deflection roller (28) mounted in the supporting frame (10) on an axle (22) by means of anti-friction bearings (24, 26), **characterized in that** the supporting frame (10) is a drop-forged part of an aluminum alloy.

2. The deflector fitting as set forth in claim 1, **characterized in that** the supporting frame (10) comprises a fastening section (12) provided with an opening (16) for a fastener bolt and a bearing section (14) which together with the fastening section (12) forms a closed ring surrounding the deflection roller (28).

3. The deflector fitting as set forth in claim 2, **characterized in that** the bearing section (14) comprises a stabilizing web (30) extending on the side of the deflection roller (28) facing away from the fastening section (12).

4. The deflector fitting as set forth in claim 2 or 3, **characterized in that** the bearing section (14) is provided with through holes (18, 20) for the axle (22) of the deflection roller (28), and that the axle (22) is caulked in the through holes (18, 20).

5. The deflector fitting as set forth in any of claims 2 to 4, **characterized in that** the deflection roller (28) projects radially beyond the adjoining portions of the bearing section (14) on the side facing the fastening section (12).

6. The deflector fitting as set forth in any of claims 2 to 5, **characterized in that** clipped to the fastening section (12) is a cover (32) of a plastics material engaging into the fastening opening (16) and clasping the section of the fastening section (12) facing the deflection roller (28).

7. The deflector fitting as set forth in claim 6, **characterized in that** a passage gap (36) for the seat belt is formed between the deflection roller (28), the bearing part (14) and the plastics cover (32), the passage gap (36) having a constant width in the region of the deflection roller (28).

8. The deflector fitting as set forth in claim 6 or 7, **characterized in that** the edge of the plastics cover (32) facing the axle (22) of the deflection roller (28) has a larger distance from the axle (22) of the deflection roller (28) in the portions not opposite the deflection roller (28) than in the portions opposite the deflection roller (28).

9. The deflector fitting as set forth in any of claims 6 to 8, **characterized in that** the edge of the plastics cover (32) facing the axle (22) of the deflection roller (28) has a curvature in the portions not opposite the deflection roller (28).

## Revendications

1. Ferrure de déviation pour une ceinture de sécurité de véhicule, comportant un étrier de retenue (10) et une poulie de déviation (28) montée dans l'étrier de retenue (10) sur un axe (22) au moyen de paliers à roulement (24, 26), **caractérisé en ce que** l'étrier de retenue (10) est une pièce estampée en un alliage d'aluminium.

2. Ferrure de déviation selon la revendication 1, **caractérisé en ce que** l'étrier de retenue (10) contient un tronçon de fixation (12) pourvu d'une ouverture (16) pour une vis de fixation et un tronçon de montage (14) qui forme conjointement avec le tronçon de fixation (12) un anneau fermé entourant la poulie de déviation (28).

3. Ferrure de déviation selon la revendication 2, **caractérisé en ce que** le tronçon de montage (14) présente une barrette de stabilisation (30) qui s'étend sur la face de la poulie de déviation (28), qui est détournée du tronçon de fixation (12).

4. Ferrure de déviation selon la revendication 2 ou 3, **caractérisé en ce que** le tronçon de montage (14) est pourvu de trous de passage (18, 20) pour l'axe (22), et **en ce que** l'axe (22) est maté dans les trous de passage (18, 20).

5. Ferrure de déviation selon l'une des revendications 2 à 4, **caractérisé en ce que** la poulie de déviation (28) fait saillie radialement au-delà des zones adjacentes du tronçon de montage, sur la face détournée du tronçon de fixation (12).

6. Ferrure de déviation selon l'une des revendications 2 à 5, **caractérisé en ce que** sur le tronçon de fixation (12) est clipsé un couvercle (32) de matière plastique qui s'engage dans l'ouverture de fixation (16) et qui entoure le tronçon tourné vers la poulie de déviation (28), du tronçon de fixation (12).

7. Ferrure de déviation selon la revendication 6, **caractérisé en ce que** entre la poulie de déviation (28), la pièce de montage (14) et le couvercle (32) de matière plastique est formé une fente de passage (36) pour la ceinture de sécurité, qui a une largeur constante dans la zone de la poulie de déviation (28).

8. Ferrure de déviation selon la revendication 6 ou 7, **caractérisé en ce que** le bord du couvercle (32) de matière plastique, qui est tourné vers la poulie de déviation (28), a dans les zones qui ne sont pas opposées à la poulie de déviation (28), une distance plus grande par rapport à l'axe (22) de la poulie de déviation (28) que dans les zones qui sont opposées à la poulie de déviation (28).

9. Ferrure de déviation selon l'une des revendications 6 à 8, **caractérisé en ce que** le bord du couvercle (32) de matière plastique, qui est tourné vers la poulie de déviation (28) présente une courbure dans les zones qui ne sont pas opposées à la poulie de déviation (28).
